# NEUE EUROPÄISCHE PATENTSCHRIFT

(11) **EP 1 033 520 B2**
(45) Veröffentlichungstag und Bekanntmachung des Hinweises auf die Entscheidung über den Einspruch: **26.05.2010**
(45) Hinweis auf die Patenterteilung: 18.08.2004
(21) Anmeldenummer: 00100355.7
(22) Anmeldetag: 07.01.2000
(51) Int. Cl.: F16L 37/02, F16L 37/088

(54) **Lösbare Steckverbindung für den Anschluss von Rohrleitungen**
Detachable plug-in connection for the connection of pipes
Raccord à emboîtement détachable pour la connexion de tuyaux

(30) Priorität: 04.03.1999 DE 19909394
(43) Veröffentlichungstag der Anmeldung: 06.09.2000
(73) Patentinhaber: Johannes Schäfer vormals Stettiner Schraubenwerke GmbH & Co. KG, 35410 Hungen (DE)
(72) Erfinder: Funk, Hans-Georg, Ing. (grad), 35410 Hungen (DE)
(74) Vertreter: Haar, Lucas Heinz Jörn

(56) Entgegenhaltungen:
- EP-A- 0 751 332
- EP-A- 0 766 033
- EP-A- 0 860 643
- EP-B- 0 059 877
- EP-B- 0 226 689
- WO-A-88//05882
- DE-A- 19 819 758
- DE-C- 19 705 167
- DE-U- 29 719 247
- US-A- 4 750 765

## Beschreibung

Die Erfindung betrifft eine Steckverbindung der im Oberbegriff des Patentanspruchs 1 angegebenen Art. Steckverbindungen dieser Art werden zum Anschließen und Verbinden von Rohr- und Schlauchleitungen, insbesondere bei Druckluftanlagen in Kraftfahrzeugen verwendet. Sie sollen das Herstellen einer zuverlässigen und druckdichten Verbindung schnell und einfach ermöglichen, im Falle einer Reparatur aber auch lösbar sein. Bei manchen Anwendungen kann auch gefordert sein, daß eine unzureichende Verriegelung der Steckverbindung bei Druckbeaufschlagung feststellbar ist, und nicht zu einer vollständigen Trennung der Steckverbindung und verbunden damit zu einer Verletzungsgefahr führen kann.

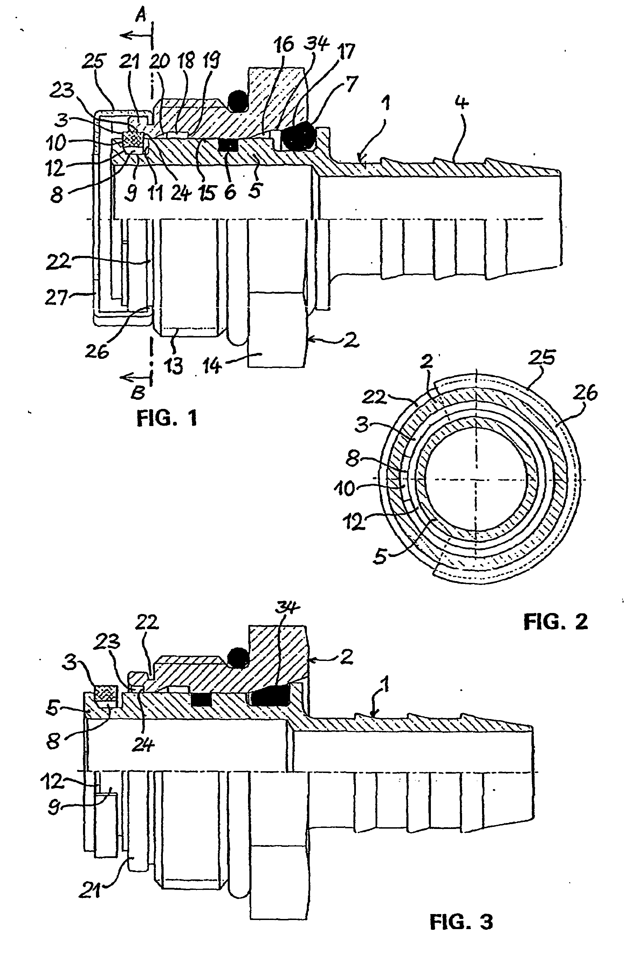

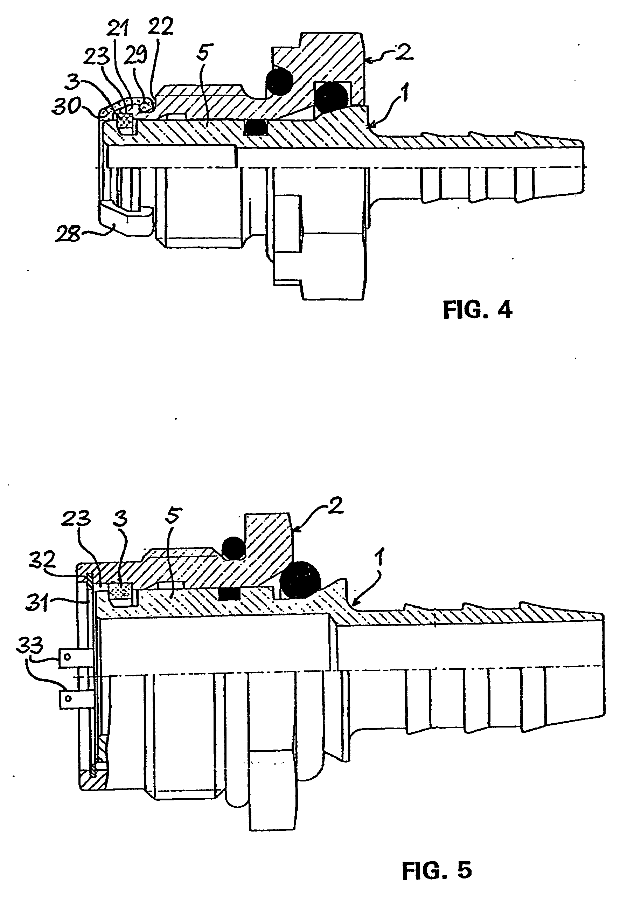

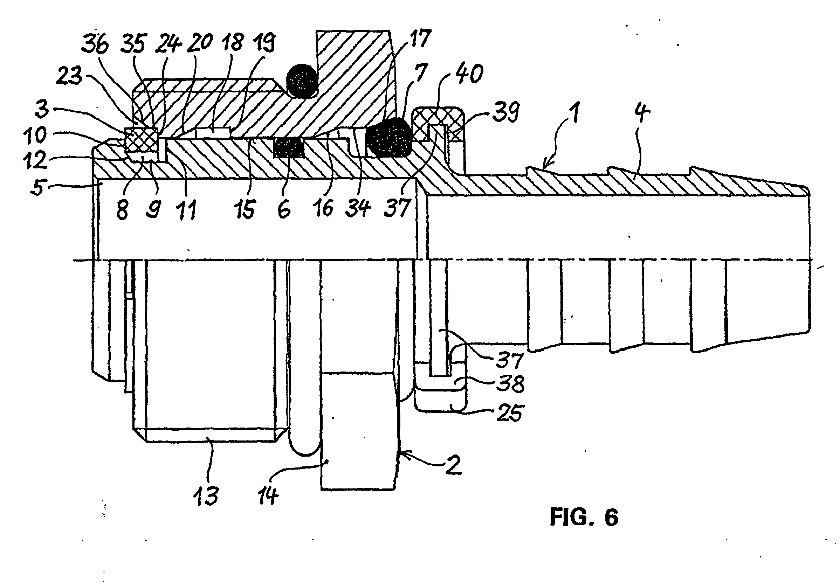

Eine Steckverbindung der angegebenen Art ist aus der EP 0 226 689 B1, Ausführungsbeispiel gemäß Figuren 5 und 6 bekannt. Bei dieser bekannten Steckverbindung sind in der den Steckzapfen aufnehmenden Öffnung des Außenteils axial hintereinander zwei Ausnehmungen vorgesehen, in die das in einer Ausnehmung des Steckzapfens angeordnete Halteelement beim Steckvorgang nacheinander einrasten kann. Hierdurch wird der Steckzapfen im Außenteil bereits vor Erreichen der Verriegelungsstellung durch das Halteelement festgehalten, wobei er in dieser Stellung nicht gegenüber dem Außenteil abgedichtet ist. Bei Druckbeaufschlagung zeigt Entweichen von Druckmittel an der undichten Stelle an, daß die Steckverbindung nicht richtig geschlossen ist. Diese bekannte Steckverbindung hat den Nachteil, daß der Steckzapfen nach einem Steckvorgang nicht mehr von dem Außenteil getrennt werden kann. Bei einer anderen in den Figuren 1 bis 4 der genannten Patentschrift dargestellten Ausgestaltung einer Steckverbindung ist das Halteelement im Außenteil angeordnet und durch eine radiale Öffnung aus dem Außenteil herausziehbar, wodurch der Steckzapfen von dem Außenteil gelöst werden kann. Diese Ausgestaltung ist verhältnismäßig aufwendig und auf eine Anordnung des Halteelements im Außenteil beschränkt. Kommt es zu einem Bruch des Halteelements, z.B. durch Ermüdung oder Korrosion, so kann sich die Steckverbindung selbsttätig lösen.

Aus der EP 0 059 877 B1 ist eine Kupplung für den Anschluß von Druckluftleitungen an Organe einer Druckluftbremse eines Kraftfahrzeugs bekannt, bei der ein in ein Gewindeloch einschraubbares Aufnahmeteil an seinem, in Einsteckrichtung gesehen, vorderen Ende einen gewindelosen, rohrförmigen Fortsatz aufweist, auf dem ein elastisch spreizbarer, geschlitzter Haltering befestigt ist, der in eine Außennut des Steckteils eingreift und dadurch beide Teile in axialer Richtung relativ zueinander fixiert. Nach dem Herausschrauben des Aufnahmeteils aus dem Gewindeloch kann der Haltering so weit aufgeweitet werden, daß er aus der Außennut des Steckteils heraustritt und dieses von dem Aufnahmeteil gelöst werden kann. Bei dieser Steckverbindung wird als nachteilig angesehen, daß nach dem Einschrauben des Aufnahmeteils in das Gehäuse eines Bremsorgans ohne besondere Hilfsmittel nicht mehr geprüft werden kann, ob der Haltering richtig am Aufnahmeteil angebracht ist.

Die EP 0 751 332 A1 beschreibt eine Steckverbindung für den Anschluß von Rohrleitungen mit einem Innenteil und einem Außenteil, die miteinander verbunden und voneinander getrennt werden können, wobei das Außenteil in einer Bohrung eines Gehäuseteils lösbar befestigt ist. Das Innenteil ist mit einem Steckzapfen in eine Öffnung des Außenteils einsteckbar und dort über ein in radialer Richtung elastisch verformbares Halteelement verriegelbar. Das Halteelement ist in einer Ausnehmung in der Mantelfläche des Steckzapfens angeordnet und beim Steckvorgang durch radiale elastische Verformung in diese Ausnehmung verdrängbar. Das Halteelement greift in der Vierriegellungsstellung des Steckzapfens im Außenteil durch elastisches Zurückverformen in eine Ausnehmung in der Öffnung des Außenteils derart ein, daß der Steckzapfen gegen das Herausziehen aus der Öffnung durch das Halteelement verriegelt ist. Die Ausnehmung in der Öffnung des Außenteils erstreckt sich bis zur vorderen Begrenzungsfläche des Außenteils. Der Steckzapfen ist in Steckrichtung über die Verriegelungsstellung hinaus in eine Lösestellung bewegbar, in der das Halteelement aus der Ausnehmung des Steckzapfens entnehmbar ist.

Der Erfindung liegt die Aufgabe zugrunde, eine Steckverbindung der angegebenen Art zu schaffen, die einfach und kostengünstig herstellbar ist, eine geringe Baulänge hat und bei der das Innenteil auf einfache Weise von dem Außenteil gelöst werden kann, und die in hohem Maße gegen selbsttätiges oder versehentliches Lösen sicher ist.

Erfindungsgemäß wird diese Aufgabe durch die in Patentanspruch 1 angegebenen Merkmale gelöst.

Bei der Steckverbindung nach der Erfindung ist die erste Ausnehmung im Außenteil, in die das Halteelement in der Verriegelungsstellung eingreift in Steckrichtung offen und Außenteil und Steckzapfen sind so gestaltet, daß der Steckzapfen gegenüber dem Außenteil in Steckrichlung über die Verriegelungsstellung hinaus in eine Lösestellung bewegt werden kann, in der das Halteelement aus dem Außenteil heraustritt. In Betrieb wird das Innenteil entgegen der Steckrichtung durch den Gehäuseinnendruck beaufschlagt und dadurch in der Verriegelungsstellung gehalten.

Die erfindungsgemäße Steckverbindung hat den Vorteil, daß das Lösen der ineinander gesteckten Teile leicht möglich ist und zwar nur nach dem Trennen des Außenteils vom Gehäuseteil. Solange das Außenteil mit dem Gehäuseteil, z.B. durch Einschrauben in eine Gewindebohrung fest verbunden ist, ist das Halteelement von außen nicht zugänglich und daher ein versehentliches Lösen der Steckverbindung nicht möglich. Die Bohrung im Gehäuseteil zur Aufnahme des Außenteils unterliegt keinen besonderen Anforderungen oder Anpassungen. Es ist keine besonders gestaltete Formbohrung erforderlich, sondern es genügt, wenn z.B. die Bohrung mit einem Innengewinde versehen ist, in welches das Außenteil mit einem Außengewinde eingeschraubt werden kann. Auch die axiale Länge der Bohrung im Gehäuseteil kann daher vergleichsweise gering bemessen sein. Von Vorteil ist weiterhin, daß das Halteelement bei der erfindungsgemäßen Steckverbindung auf dem Steckzapfen angeordnet ist, so daß vor der Montage des Steckzapfens das Vorhandensein und der einwandfreie Zustand des Halteelements kontrolliert werden kann. Die erfindungsgemäße Steckverbindung bietet auf einfache Weise auch Sicherheit gegen Lösen des Steckzapfens bei unzureichender Verriegelung, indem in der Öffnung des Außenteils, in Steckrichtung gesehen, vor der einen Ausnehmung und im Abstand von dieser eine zweite Ausnehmung vorgesehen ist, in die das Halteelement vor Erreichen der Verriegelungsstellung durch elastisches Zurückverformen eingreift und dadurch den Steckzapfen in dem Außenteil festhält, wobei in dieser Stellung die Abdichtung des Steckzapfens in der Öffnung des Außenteils unvollständig und daß die zweite Ausnehmung so ausgebildet ist, daß durch tieferes Hineindrücken des Steckzapfens in das Außenteil der Steckzapfen mit dem Halteelement in die Verriegelungsstellung bewegbar ist. Die beiden Ausnehmungen gewährleisten in vorteilhafter Weise aufgrund ihrer Anordnung in der Öffnung des Außenteils eine stabile Verbindung von Außen- und Innenteil. Eine Begrenzung der Einstecktiefe des Steckzapfens kann erfindungsgemäß mit Hilfe eines lösbaren Anschlagelements erreicht werden, das ein Verschieben des Steckzapfens in die Lösestellung verhindert, damit beim Steckvorgang das Halteelement nicht aus dem Außenteil heraustreten kann. Das Anschlagelement kann entweder an dem aus dem Außenteil herausragenden Abschnitt des Innenteils oder an dem in Steckrichtung vorderen Ende des Außenteils angeordnet sein. Das Anschlagelement kann dabei aus einem durch einen Radialschlitz unterbrochenen elastisch verformbaren Ring bestehen, der das Innenteil oder das Außenteil auf einem Umfangswinkel größer 180°, insbesondere 220° bis 270° umgreift. Zur Befestigung kann der Ring in eine Außennut eingreifen oder auf einem Ringbund angeordnet sein, der in eine Ringnut in der Bohrungsfläche des Rings eingreift. Das am vorderen Ende des Außenteils angeordnete Anschlagelement kann erfindungsgemäß so gestaltet sein, daß es die in Steckrichtung vordere Endfläche des Steckzapfens übergreift. Eine geringe Baulänge der Steckverbindung und kleine Abmessungen des Anschlagelements können weiterhin durch eine Gestaltung erreicht werden, bei der das Anschlagelement die Mantelfläche des vorderen Endes des Steckzapfens außen umgreift und einen Anschlag für die vordere Stirnfläche des Halteelements bildet. In einer anderen Ausgestaltung kann das Anschlagelement aus einem durch einen radialen Schlitz unterbrochenen und radial zusammendrückbaren Ring bestehen, der in eine Innennut in der Ausnehmung im Außenteil eingreift, wobei der Ring sehr einfach und kostengünstig sein kann. Verwendbar ist beispielsweise ein Drahtsprengring aus rundem Federdraht oder ein genormter Sicherungsring. Die das Außenteil von außen umgreifenden Ringe können dagegen als Blechformteil oder als Kunststoffspritzteil ausgebildet sein.

Nach einem weiteren Vorschlag der Erfindung kann das Außenteil an seinem in Steckrichtung hinteren Ende eine Ausnehmung aufweisen, in der eine elastische Dichtung angeordnet ist, die an einer Schulter des Innenteils anliegt und in der Verriegelungsstellung des Steckzapfens entgegen der Steckrichtung eine axiale Kraft auf das Innenteil ausübt. Durch die Dichtung wird die Steckverbindung axial verspannt. Zusätzlich kann erfindungsgemäß die elastische Dichtung zur axialen Verspannung der Steckverbindung das Anschlagelement bilden, wobei sie so anzuordnen ist, daß sie in der Entriegelungsstellung aus der Anschlagposition entfernt werden kann. Ist die elastische Dichtung hingegen so angeordnet, daß sie in der Verriegelungsstellung des Steckzapfens von außen nicht entfernt werden kann, so muß sie soweit elastisch verformbar gestaltet und gegebenenfalls axial verschiebbar sein, daß der Steckzapfen durch Überwindung der axialen Kraft in die Lösestellung bewegbar ist. In der Lösestellung ist die elastische Dichtung an einer zylindrischen oder hinterschnittenen Fläche im Außenteil derart abgestützt, daß der Steckzapfen reib- oder formschlüssig festgehalten wird. Hierdurch wird das Entnehmen des Halteelements erleichtert.

Das Halteelement kann bei der erfindungsgemäßen Steckverbindung ein radial geschlitzter, radial verformbarer, kreisförmiger Ring sein, der einen rechteckigen Querschnitt hat. Die Ringgestalt hat den Vorteil, daß die Einbaulage des Rings beliebig sein kann und keine nennenswerten Radialkräfte auftreten. Es können aber auch Ringe anderer Querschnittsform, z.B. Runddrahtringe, als Halteelement verwendet werden. Die Ausnehmung im Steckzapfen zur Aufnahme des Halteelements besteht erfindungsgemäß aus einer Außennut mit radialen Seitenflächen für die Abstützung des Halteelements. An die radiale Seitenfläche der Außennut, an der sich das Halteelement in Steckrichtung abstützt, schließt sich radial nach innen eine sich zur Nutmitte hin verjüngende Kegelfläche an. Die Neigung der Kegelfläche zur Längsachse des Steckzapfens kann 30° bis 60° betragen. Durch die Kegelfläche wird das Halteelement in der Verriegelungsstellung radial nach innen abgestützt und ist dadurch zusätzlich gegen Ausweichen radial nach innen gesichert.

Die Erfindung wird nachfolgend anhand von Ausführungsbeispielen näher erläutert, die in der Zeichnung dargestellt sind. Es zeigen
- Figur 1: ein erstes Ausführungsbeispiel einer erfindungsgemäßen Steckverbindung in der Verriegelungsstellung,
- Figur 2: eine Schnittansicht entlang der Linie A-B der Steckverbindung gemäß Figur 1,
- Figur 3: die Steckverbindung gemäß Figur 1 in Lösestellung,
- Figur 4: ein zweites Ausführungsbeispiel einer erfindungsgemäßen Steckverbindung,
- Figur 5: ein drittes Ausführungsbeispiel einer erfindungsgemäßen Steckverbindung.
- Figur 6: ein viertes Ausführungsbeispiel einer erfindungsgemäßen Steckverbindung.

Die in den Figuren 1 bis 3 dargestellte Steckverbindung besteht aus einem Innenteil 1 und einem Außenteil 2, die durch ein Halteelement 3 miteinander verbindbar sind. Das Innenteil hat die Form eines Rohres und weist an einem Ende eine Tülle 4 zur Befestigung einer Druckleitung auf. Das andere Ende des Innenteils 1 ist als Steckzapfen 5 ausgebildet und trägt in im Abstand voneinander angeordneten Außennuten einen Dichtring 6 zur Innenabdichtung und einen Dichtring 7 zur Außenabdichtung. An seinem in Steckrichtung vorderen Ende ist der Steckzapfen 5 mit einer durch eine Außenringnut gebildeten Ausnehmung 8 versehen, in der das Halteelement 3 angeordnet ist. Die Ausnehmung 8 hat eine zylindrische Bodenfläche 9, eine radiale vordere Seitenfläche 10, eine radiale hintere Seitenfläche 11 und eine die vordere Seitenfläche 10 mit der Bodenfläche 9 verbindende Kegelfläche 12. In der Ausnehmung 8 befindet sich das Halteelement 3, das als ein von einem radialen Schlitz unterbrochener Ring aus Kunststoff oder Metall ausgebildet ist, der einen rechteckigen Querschnitt hat. Die Tiefe der Ausnehmung 8 ist gleich oder größer als die radiale Dicke des Halteelements 3.

Das Außenteil 2 ist als Einschraubstück mit einem Außengewinde 13 und einem Außensechskant 14 ausgebildet. Es weist zur Aufnahme des Steckzapfens 5 eine durchgehende Aufnahmebohrung 15 auf, deren Innendurchmesser an den Durchmesser des Steckzapfens 5 angepasst ist. Die Einstecköffnung der Aufnahmebohrung 15 ist durch zwei von einer kurzen Zylinderfläche 34 getrennte Kegelflächen 16, 17 erweitert. Die Kegelfläche 16 dient zum radialen Zusammendrücken des Halteelements 3 beim Steckvorgang. An der Kegelfläche 17 stützt sich der in der in Figur 1 gezeigten Verriegelungsstellung elastisch verformte Dichtring 7 ab, wodurch eine axiale Kraft erzeugt wird, die entgegen der Steckrichtung auf den Steckzapfen 5 einwirkt.

In der Aufnahmebohrung 15 ist durch eine eingestochene Nut eine ringförmige Ausnehmung 18 gebildet, deren Breite und radiale Tiefe so groß bemessen sind, daß das Halteelement 3 etwa mit der Hälfte seines Ringquerschnitts in die Ausnehmung 18 eindringen kann. Die Ausnehmung 18 wird entgegen der Steckrichtung durch eine radiale Seitenfläche 19 und in Steckrichtung durch eine sich in Steckrichtung verjüngende Kegelfläche 20 begrenzt. Das in Steckrichtung vordere Ende des Außenteils 1 weist einen zylindrischen Fortsatz 21 auf, der durch eine Außennut 22 von dem Außengewinde 13 getrennt ist. Innerhalb des Fortsatzes 21 ist in der Aufnahmebohrung 15 eine Ausnehmung 23 ausgebildet, die sich bis zur Stirnfläche des Fortsatzes 21 erstreckt und entgegen der Steckrichtung durch eine radiale Seitenfläche 24 begrenzt wird. Die Ausnehmung 23 hat die gleiche radiale Tiefe wie die Ausnehmung 18. Den Fortsatz 21 umgreift ein ringförmiges, aus Blech geformtes Anschlagelement 25, das durch einen sich über einen Umfangswinkel von 135° erstreckenden, radialen Schlitz unterbrochen ist. Zur axialen Fixierung greift das Anschlagelement 25 mit einem Kragen 26 in die Außennut 22 ein. Ein zweiter, radial nach innen gerichteter Kragen 27 des Anschlagelements 25 befindet sich in einem Abstand vor der Stirnfläche des Fortsatzes 21 und erstreckt sich radial nach innen bis vor die Stirnfläche des Steckzapfens 5, so daß der Steckzapfen 5 bei einer Bewegung in Steckrichtung mit seiner Stirnfläche an dem Kragen 27 anschlägt und nicht mehr weiter in Steckrichtung bewegt werden kann. Der Außendurchmesser des Anschlagelements 25 ist gleich oder etwas kleiner als der Innendurchmesser des Gewindes, in das das Außenteil 2 mit seinem Außengewinde 13 einschraubbar ist.

Figur 1 zeigt die Steckverbindung in der Verriegelungsstellung, in der der Steckzapfen 5 wirksam durch den Dichtring 6 in der Bohrung 15 abgedichtet ist und in der der Dichtring 7 den Steckzapfen 5 in axialer Richtung mit der Seitenfläche 10 gegen das Halteelement 3 und dieses wiederum gegen die Seitenfläche 24 der Ausnehmung 23 drückt. Das Halteelement 3 liegt hierbei mit seiner zylindrischen Mantelfläche an der Innenfläche der Ausnehmung 23 an. Einer elastischen Verformung des Halteelements 3 radial nach innen wirkt die Kegelfläche 12 entgegen. In dieser Verriegelungsstellung ist der axiale Abstand zwischen der Stirnfläche des Steckzapfens 5 und dem Kragen 27 deutlich kleiner als die axiale Länge der Ausnehmung 23. Hierdurch wird gewährleistet, daß in der Anschlagposition des Steckzapfens 5 sich das Halteelement 3 noch innerhalb der Ausnehmung 23 befindet.

Wird beim Einstecken des Steckzapfens 5 in das Außenteil 2 die in Figur 1 gezeigte Verriegelungsstellung nicht erreicht, so rastet das Halteelement 3 bei der Bewegung des Steckzapfens 5 entgegen der Steckrichtung in die Ausnehmung 18 ein und verhindert dadurch, daß der Steckzapfen 5 aus dem Außenteil 2 heraustreten kann. In der Stellung des Steckzapfens 5, in der das Halteelement 3 an der Seitenfläche 19 der Ausnehmung 18 anliegt, sind die Dichtringe 6 und 7 nicht mehr wirksam. Das Druckmittel kann daher durch den Spalt zwischen Steckzapfen 5 und Außenteil 2 austreten und dadurch den fehlerhaften Steckvorgang hörbar oder sichtbar anzeigen.

Zum Lösen der Steckverbindung muß zuerst das Außenteil 2 aus dem angeschlossenen Gehäuseteil herausgeschraubt werden, damit das Anschlagelement 25 zugänglich ist. Mit Hilfe eines geeigneten Werkzeugs kann dann das Anschlagelement 25 in radialer Richtung von dem Fortsatz 21 abgezogen werden, wobei es elastisch aufgeweitet wird. Anschließend wird der Steckzapfen 5 unter Verformung des Dichtrings 7, wie in Figur 3 gezeigt, soweit in das Außenteil hineingedrückt, bis das Halteelement 3 frei liegt. In dieser Stellung des Steckzapfens 5 befindet sich der Dichtring 7 etwa zur Hälfte innerhalb der Zylinderfläche 34 und wird dadurch reibschlüssig in dieser Lage gehalten. Das Halteelement 3 kann daher, ohne daß es zusätzlicher Maßnahmen zur Fixierung des Steckzapfens 5 bedarf, durch Aufweiten von dem Steckzapfen 5 abgenommen werden. Danach kann der Steckzapfen 5 aus dem Außenteil 2 herausgezogen werden.

Die in Figur 4 gezeigte Steckverbindung stimmt in ihrem grundsätzlichen Aufbau bis auf die Gestaltung des Anschlagelements mit der vorstehend beschriebenen Steckverbindung überein. Das hier mit 28 bezeichnete Anschlagelement ist als ringförmiges Kunststoffspritzteil ausgebildet, das durch einen radialen, sich über einen Ringsektor von 90° erstreckenden Schlitz unterbrochen ist. Das Anschlagelement 28 umgreift den Fortsatz 21 des Außenteils 2 und ist mit einem Befestigungswulst 29 in der Außennut 22 des Fortsatzes 21 fixiert. Der vordere, konisch verjüngte Abschnitt des Anschlagelements 28 hat einen sich radial nach innen erstreckenden Bund 30, der in der gezeigten Verriegelungsstellung der Steckverbindung das vordere Ende des Steckzapfens 5 umgreift und einen axialen Anschlag für das Halteelement 3 bildet, durch den das Halteelement 3 in axialer Richtung in der Ausnehmung 23 des Außenteils 2 gehalten wird. Zum Trennen des Steckzapfens 5 von dem Außenteil 2 kann das Anschlagelement 28 aufgeweitet und in radialer Richtung von dem Fortsatz 21 abgezogen werden.

Die Steckverbindung gemäß Figur 5 unterscheidet sich von den vorangegangenen Steckverbindungen dadurch, daß in der Ausnehmung 23 ein als Sicherungsring ausgebildetes Anschlagelement 31 angeordnet ist, das die Ausnehmung 23 in Steckrichtung verschließt und einen festen Anschlag für das Halteelement 3 bildet. Das Anschlagelement 31 besteht aus einem durch einen radialen Schlitz unterbrochenen, aus Federstahl hergestellten Ring, der mit seinem radial äußeren Rand in eine in der Ausnehmung 23 vorgesehene Innennut 32 eingreift. An den beiden Umfangsenden des Anschlagelements 31 ist jeweils ein sich in axialer Richtung erstreckender Lappen 33 angebracht, an dem das Anschlagelement 31 mit Hilfe einer Zange gegriffen und soweit zusammengedrückt werden kann, daß es aus der Innennut 32 herausnehmbar ist. Bei dem in Figur 5 gezeigten Beispiel hat das Anschlagelement 31 einen Innendurchmesser, der geringfügig größer ist als der Außendurchmesser des vorderen Endes des Steckzapfens 5. Dies ermöglicht eine etwas geringere axiale Baulänge des Außenteils 2. Das Anschlagelement 31 kann aber auch einen Innendurchmesser haben, der kleiner ist als der Außendurchmesser des vorderen Endes des Steckzapfens 5. Es bildet dann einen Anschlag für den Steckzapfen 5 und nicht für das Halteelement 3. Dem Nachteil einer etwas größeren Baulänge des Außenteils 2 steht dann der Vorteil gegenüber, daß als Anschlagelement 31 genormte Ausführungen von Sicherungsringen verwendet werden können.

Bei der in Figur 6 dargestellten Ausgestaltung der Steckverbindung erstreckt sich das Außengewinde 13 bis zu der in Steckrichtung vorderen Begrenzungsfläche des Außenteils 2. Die Bohrungsfläche der Ausnehmung 23 des Außenteils 2 setzt sich aus einem an die Seitenfläche 24 angrenzenden zylindrischen Abschnitt 35 und einer den Abschnitt 35 mit der vorderen Begrenzungsfläche des Außenteils 2 verbindenden kegeligen Zentrierfläche 36 zusammen, die sich in Steckrichtung erweitert. Zur Begrenzung der Einstecktiefe des Steckzapfens 5 weist dieser an seinem aus dem Außenteil 2 herausragenden Ende einen nach außen vorspringenden Ringbund 37 auf, an dem ein Anschlagelement 40 lösbar befestigt ist. Das Anschlagelement 40 besteht hierbei aus einem durch einen radialen Schlitz 38 unterbrochenen Ring, der sich über einen Umfangswinkel von etwa 235° erstreckt und elastisch aufweitbar ist. In seiner Bohrungsfläche weist der Ring eine mittige Ringnut 39 auf, in die der Ringbund 37 zur axialen Lagesicherung eingreift.

Figur 6 zeigt die Steckverbindung in der Verriegelungsstellung, in der der Steckzapfen 5 wirksam durch den Dichtring 6 in der Bohrung 15 abgedichtet ist und in der der Dichtring 7 den Steckzapfen 5 in axialer Richtung mit der Seitenfläche 10 gegen das Halteelement 3 und dieses wiederum gegen die Seitenfläche 24 der Ausnehmung 23 drückt. Das Halteelement 3 liegt hierbei mit seiner zylindrischen Mantelfläche an dem Abschnitt 35 der Bohrungsfläche der Ausnehmung 23 an. Einer elastischen Verformung des Halteelements 3 radial nach innen wirkt die Kegelfläche 12 entgegen. In dieser Verriegelungsstellung ist der axiale Abstand zwischen dem Außenteil 2 und dem Anschlagelement 40 deutlich kleiner als die axiale Länge der Ausnehmung 23. Hierdurch wird gewährleistet, daß in der Anschlagposition des Anschlagelements 40 sich das Halteelement 3 noch innerhalb der Ausnehmung 23 befindet.

Wird beim Einstecken des Steckzapfens 5 in das Außenteil 2 die Verriegelungsstellung nicht erreicht, so rastet das Halteelement 3 bei der Bewegung des Steckzapfens 5 entgegen der Steckrichtung in die Ausnehmung 18 ein, wobei das Halteelement 3 von der Seitenfläche 19 der Ausnehmung 18 in dem Außenteil 2 festgehalten wird. In dieser Stellung des Steckzapfens 5 sind die Dichtringe 6 und 7 nicht mehr wirksam und Druckmittel kann durch einen Spalt zwischen Steckzapfen 5 und Außenteil 2 austreten und dadurch den fehlerhaften Steckvorgang hörbar oder sichtbar anzeigen.

Zum Lösen der Steckverbindung muß das Außenteil 2 aus dem angeschlossenen Gehäuseteil herausgeschraubt werden und mit Hilfe eines geeigneten Werkzeugs dann das Anschlagelement 40 in radialer Richtung von dem Ringbund 37 abgezogen werden, wobei es elastisch aufgeweitet wird. Anschließend wird der Steckzapfen 5 unter Verformung des Dichtrings 7 soweit in das Außenteil hineingedrückt, bis das Halteelement 3 frei liegt. In dieser Stellung des Steckzapfens 5 befindet sich der Dichtring 7 etwa zur Hälfte innerhalb der Zylinderfläche 34 und wird dadurch reibschlüssig in dieser Lage gehalten. Das Halteelement 3 kann daher, ohne daß es zusätzlicher Maßnahmen zur Fixierung des Steckzapfens 5 bedarf, durch Aufweiten von dem Steckzapfen 5 abgenommen werden. Danach kann der Steckzapfen 5 aus dem Außenteil 2 herausgezogen werden.

Die Steckverbindung ist so gestaltet, daß auch ohne Montage des Anschlagelements 40 die erforderliche Betriebssicherheit gegeben ist. Zwar kann in diesem Fall der Steckzapfen 5 beim Zusammenstecken der Steckverbindung bis zum Erreichen der Lösestellung in das Außenteil 2 hineingedrückt werden. Der Dichtring 6 dichtet aber auch in der Lösestellung den Steckzapfen 5 wirksam gegenüber dem Außenteil 2 ab, so daß die Gefahr einer Undichtigkeit nicht gegeben ist. Wird die Steckverbindung dann im Betrieb mit Druck beaufschlagt, so sorgt die auf den Steckzapfen einwirkende Druckkraft dafür, daß der Steckzapfen 5 in die Verriegelungsstellung zurück gedrückt wird, in der er dann auch bei einer Unterbrechung der Druckbeaufschlagung durch die Axialkraft des Dichtrings 7 festgehalten wird. Beim Zurückbewegen des Steckzapfens 5 von der Lösestellung in die Verriegelungsstellung sorgen die Zentrierfläche 36 und die Kegelfläche 12 dafür, daß das Halteelement 3 in die in der Zeichnung dargestellte Verriegelungsposition gelangt.

Zur baulichen Vereinfachung der beschriebenen Steckverbindung kann auch vorgesehen sein, daß die elastische Dichtung 7 die Funktion des Anschlagelements 40 zusätzlich erfüllt. In diesem Fall muß die elastische Dichtung 7 so ausgestaltet und angeordnet sein, daß sie in der Verriegelungsstellung des Steckzapfens soweit demontierbar ist, daß der Steckzapfen in die Lösestellung gebracht werden kann.

## Patentansprüche

1. Steckverbindung für den Anschluß von Rohrleitungen mit einem Innenteil (1) und einem Außenteil (2), die miteinander verbunden und voneinander getrennt werden können, wobei das Außenteil (2) in einer Bohrung eines Gehäuseteils lösbar befestigt ist und das Innenteil (1) mit einem Steckzapfen (5) in eine Öffnung des Außenteils (2) einsteckbar und dort über ein in radialer Richtung elastisch verformbares Halteelement (3) verriegelbar ist, das in einer Ausnehmung (8) in der Mantelfläche des Steckzapfens (5) angeordnet und beim Steckvorgang durch radiale elastische Verformung in diese Ausnehmung (8) verdrängbar ist und das in der Verriegelungsstellung des Steckzapfens (5) im Außenteil (2) durch elastisches Zurückverformen in eine Ausnehmung (23) in der Öffnung des Außenteils (2) derart eingreift, daß der Steckzapfen (5) gegen Herausziehen aus der Öffnung durch das Halteelement (3) verriegelt ist, wobei die Ausnehmung (23) in der Öffnung des Außenteils (2) sich bis zu der in Steckrichtung vorderen Begrenzungsfläche,des Außenteils (2) erstreckt, und daß der Steckzapfen (5) mit dem Halteelement (3) in Steckrichtung über die Verriegelungsstellung hinaus in eine Lösestellung bewegbar ist, in der das Halteelement (3) aus der Ausnehmung (8) des Steckzapfens entnehmbar ist, **dadurch gekennzeichnet, daß** in der Öffnung des Außenteils (2), in Steckrichtung gesehen, vor der einen Ausnehmung (23) und im Abstand von dieser eine zweite Ausnehmung (18) vorgesehen ist, in die das Halteelement (3) vor Erreichen der Verriegelungsstellung durch elastisches Zurückverformen eingreift und **dadurch** den Steckzapfen (5) in dem Außenteil (2) festhält und daß in dieser Stellung der Steckzapfen (5) in der Öffnung des Außenteils (2) unvollständig abgedichtet ist und die zweite Ausnehmung (18) in Steckrichtung durch eine sich in Steckrichtung verjüngende Kegelfläche (20) begrenzt und so ausgebildet ist, daß durch tieferes Hineindrücken des Steckzapfens (5) in das Außenteil (2) der Steckzapfen (5) mit dem Halteelement (3) in die Verriegelungsstellung bewegbar ist, in der der Steckzapfen (5) durch einen Dichtring (6) in der Öffnung des Außenteils (2) abgedichtet ist, und daß die Ausnehmung (23) in der Öffnung des Außenteils (2), in die das Halteelement (3) in der Verriegelungsstellung eingreift, eine sich in Steckrichtung kegelig erweiternde Zentrierfläche (36) hat.

2. Steckverbindung nach Anspruch 1, **dadurch gekennzeichnet, daß** an dem in der Verriegelungsstellung aus dem Außenteil (2) herausragenden Abschnitt des Innenteils (1) ein Anschlagelement (40) lösbar befestigt ist, das nach Erreichen der Verriegelungsstellung und vor Erreichen der Lösestellung eine Bewegung des Steckzapfens (5) in Steckrichtung durch Anschlagen an dem Außenteil (2) begrenzt und daß nach dem Entfernen des Anschlagelements (40) von dem Außenteil (2) der Steckzapfen (5) in die Lösestellung bewegbar ist.

3. Steckverbindung nach Anspruch 1, **dadurch gekennzeichnet, daß** an dem in Steckrichtung vorderen Ende des Außenteils (2) ein Anschlagelement (25, 28, 31) lösbar befestigt ist, das die Bewegung des Steckzapfens (5) in Steckrichtung begrenzt und daß nach dem Entfernen des Anschlagelements (25,28,31) von dem Außenteil (2) der Steckzapfen (5) mit dem Halteelement (3) in Steckrichtung über die Verriegelungsstellung hinaus in eine Lösestellung bewegbar ist, in der das Halteelement (3) aus der Ausnehmung (23) des Steckzapfens entnehmbar ist.

4. Steckverbindung nach Anspruch 3, **dadurch gekennzeichnet, daß** das Anschlagelement (25) die in Steckrichtung vordere Endfläche des Steckzapfens (5) übergreift.

5. Steckverbindung nach Anspruch 3, **dadurch gekennzeichnet, daß** das Anschlagelement (28) in der Verriegelungsstellung die Mantelfläche des vorderen Endes des Steckzapfens (5) außen umgreift und einen Anschlag für das Halteelement (3) bildet.

6. Steckverbindung nach Anspruch 2 oder 3, **dadurch gekennzeichnet, daß** das Anschlagelement (25, 28, 40) aus einem durch einen Radialschlitz unterbrochenen elastisch verformbaren Ring besteht, der das Innenteil (1) oder das Außenteil (2) auf einem Umfangswinkel größer 180° umgreift.

7. Steckverbindung nach Anspruch 6, **dadurch gekennzeichnet, daß** das Anschlagelement (25, 28, 40) in eine Außennut (22) des Außenteils (2) oder des Innenteils (1) eingreift.

8. Steckverbindung nach Anspruch 2, **dadurch gekennzeichnet, daß** das Anschlagelement (40) einen auf der Mantelfläche des Innenteils ausgebildeten Ringbund (37) umgreift und in einer Bohrungsfläche eine Nut (38) zur Aufnahme des Ringbunds (37) aufweist.

9. Steckverbindung nach Anspruch 3, **dadurch gekennzeichnet, daß** das Anschlagelement (31) aus einem durch einen radialen Schlitz unterbrochenen und radial zusammendrückbaren Ring besteht, der in eine Innennut (32) in der Ausnehmung (23) im Außenteil eingreift.

10. Steckverbindung nach Anspruch 1, **dadurch gekennzeichnet, daß** das Außenteil (2) an seinem in Steckrichtung hinteren Ende eine Ausnehmung aufweist, in der eine elastische Dichtung (7) angeordnet ist, die an einer Schulter des Innenteils (1) anliegt und in der Verriegelungsstellung des Steckzapfens (5) entgegen der Steckrichtung eine axiale Kraft auf das Innenteil (1) ausübt.

11. Steckverbindung nach Anspruch 10, **dadurch gekennzeichnet, daß** die elastische Dichtung (7) in der Lösestellung derart an dem Steckzapfen (5) und dem Außenteil (2) abgestützt ist, daß der Steckzapfen (5) reib- oder formschlüssig von der Dichtung (7) in der Lösestellung gehalten wird.

12. Steckverbindung nach einem der Ansprüche 10 oder 11, **dadurch gekennzeichnet, daß** die elastische Dichtung (7) ein Anschlagelement bildet, das nach Erreichen der Verriegelungsstellung und vor Erreichen der Lösestellung eine Bewegung des Steckzapfens (5) in Steckrichtung begrenzt.

13. Steckverbindung nach einem der vorhergehenden Ansprüche, **dadurch gekennzeichnet, daß** das Halteelement (3) ein radial geschlitzter, radial verformbarer, kreisförmiger Ring ist, der einen rechteckigen Querschnitt hat.

14. Steckverbindung nach einem der vorhergehenden Ansprüche, **dadurch gekennzeichnet, daß** die Ausnehmung (8) im Steckzapfen (5) zur Aufnahme des Halteelements (3) aus einer Außennut mit radialen Seitenflächen (10, 11) für die Abstützung des Halteelements besteht.

15. Steckverbindung nach Anspruch 14, **dadurch gekennzeichnet, daß** sich an die radiale Seitenfläche (10) der Ausnehmung (8) im Steckzapfen (5), an der sich das Halteelement (3) in Steckrichtung abstützt, radial nach innen eine sich zur Mitte der Ausnehmung (8) hin verjüngende Kegelfläche (12) anschließt.

## Claims

1. Plug-type connector for connecting pipelines comprising an inner part (1) and an outer part (2) which can be connected to one another and separated from one another, the outer part (2) being detachably fastened in an aperture of a housing part and the inner part (1) being insertable with an insertion pin (5) into an opening of the outer part (2) where it can be locked by a holding element (3) which is elastically deformable in the radial direction and arranged in a recess (8) in the circumferential surface of the insertion pin (5), and during the insertion operation can be displaced into this recess (8) by radial elastic deformation and, in the locking position of the insertion pin (5) in the outer part (2), engages in a recess (23) in the opening of the outer part (2), owing to elastic rebound deformation, in such a way that the insertion pin (5) is locked against withdrawal from the opening by the holding element (3), the recess (23) in the opening of the outer part (2) extending up to the, in the direction of insertion, leading boundary face of the outer part (2), and in such a way that the insertion pin (5) with the holding element (3) can be moved in the direction of insertion beyond the locking position into a release position, in which the holding element (3) can be removed from the recess (8) of the insertion pin, **characterised in that**, viewed in the direction of insertion, a second recess (18) is provided in the opening of the outer part (2) upstream of the one recess (23) and at a distance therefrom, into which second recess the holding element (3) engages, owing to elastic rebound deformation, prior to reaching the locking position and as a result secures the insertion pin (5) in the outer part (2), and **in that** in this position the insertion pin (5) is incompletely sealed in the opening of the outer part (2) and the second recess (18) is determinated by a conical surface (20), which tapers in the direction of insertion, and is constructed in such a way that the insertion pin (5) with the holding element (3) can be moved into the locking position by pushing the insertion pin (5) deeper into the outer part (2), in which locking position the insertion pin (5) is sealed in the opening of the outer part (2) by a sealing ring, and **in that** the recess (23) in the opening of the outer part (2), into which the holding element (3) engages in the locking position, has a centring face (36) expanding conically in the direction of insertion.

2. Plug-type connector according to claim 1, **characterised in that** detachably fastened to the portion of the inner part (1) projecting from the outer part (2) in the locking position is an abutment element (40) which, after attaining the locking position and before attaining the release position, limits the movement of the insertion pin (5) in the direction of insertion by abutting on the outer part (2) and **in that**, after removing the abutment element (40) from the outer part (2), the insertion pin (5) can be moved into the release position.

3. Plug-type connector according to claim 1, **characterised in that** at the, in the direction of insertion, leading end of the outer part (2) there is detachably fastened an abutment element (25, 28, 31) limiting the movement of the insertion pin (5) in the direction of insertion and **in that**, after removal of the abutment element (25, 28, 31) from the outer part (2), the insertion pin (5) with the holding element (3) can be moved in the direction of insertion, beyond the locking position into a release position in which the holding element (3) can be removed from the recess (23) of the insertion pin.

4. Plug-type connector according to claim 3, **characterised in that** the abutment element (25) overlaps the, in the direction of insertion, leading end face of the insertion pin (5).

5. Plug-type connector according to claim 3, **characterised in that** in the locking position, the abutment element (28) outwardly encloses the circumferential surface of the leading end of the insertion pin (50) and forms a abutment for the holding element (3).

6. Plug-type connector according to claim 2 or 3, **characterised in that** the abutment element (25, 28, 40) consists of an elastically deformable ring interrupted by a radial slot and which encloses the inner part (1) or the outer part (2) over a circumferential angle greater than 180°.

7. Plug-type connector according to claim 6, **characterised in that** the abutment element (25, 28, 40) engages in an outer groove (22) of the outer part (2) or of the inner part (1).

8. Plug-type connector according to claim 2, **characterised in that** the abutment element (40) encloses an annular collar (37) formed on the circumferential surface of the inner part and in an aperture face comprises a groove (38) for receiving the annular collar (37).

9. Plug-type connector according to claim 3, **characterised in that** the abutment element (31) consists of a radially compressible ring interrupted by a radial slot and which engages in an inner groove (32) in the recess (23) in the outer part.

10. Plug-type connector according to claim 1, **characterised in that** the outer part (2) has, at its end trailing in the direction of insertion, a recess in which an elastic seal (7) is arranged which joins a shoulder of the inner part (1) and in the locking position of the insertion pin (5) exerts an axial force on the inner part (1) counter to the direction of insertion.

11. Plug-type connector according to claim 10, **characterised in that**, in the release position, the elastic seal (7) is supported on the insertion pin (5) and the outer part (2) in such a way that the insertion pin (5) is held positively or frictionally by the seal (7) in the release position.

12. Plug-type connector according to either of claims 10 and 11, **characterised in that** the elastic seal (7) forms an abutment element which, after achieving the locking position and before achieving the release position, limits the movement of the insertion pin (5) in the direction of insertion.

13. Plug-type connector according to any of the preceding claims, **characterised in that** the holding element (3) is a radially slotted, radially deformable circular ring with a rectangular cross-section.

14. Plug-type connector according to any of the preceding claims, **characterised in that** the recess (8) in the insertion pin (5) for receiving the holding element (3) consists of an outer groove with radial lateral faces (10, 11) for supporting the holding element.

15. Plug-type connector according to claim 14, **characterised in that** a conical surface (12) tapering toward the centre of the recess (8) adjoins the radial lateral face (10) of the recess (8) in the insertion pin (5) on which the holding element (3) is supported in the direction of insertion.

## Revendications

1. Raccord par emboîtement pour le raccord de tuyaux de canalisation, avec une partie intérieure (1) et une partie extérieure (2) qui peuvent être reliées entre elles et séparées l'une de l'autre, la partie extérieure (2) étant fixée de façon réversible dans un trou d'une pièce de boîtier et la partie intérieure (1) pouvant être enfichée par un tenon de raccordement (5) dans une ouverture de la partie extérieure (2) et pouvant y être verrouillée au moyen d'un élément de retenue (3) déformable élastiquement en direction radiale, lequel élément de retenue est disposé dans un évidement (8) pratiqué dans l'enveloppe du tenon de raccordement (5) et peut être repoussé lors du processus d'emboîtement dans cet évidement (8) par déformation élastique radiale et qui en position verrouillée du tenon de raccordement (5) dans la partie extérieure (2) s'engage de telle sorte par retour de déformation élastique dans un évidement (23) pratiqué dans l'ouverture de la partie extérieure (2) que le tenon de raccordement (5) est verrouillé contre l'extraction hors de l'ouverture par l'élément de retenue (3), l'évidement (23) pratiqué dans l'ouverture de la partie extérieure (2) s'étendant jusqu'à la surface de délimitation antérieure, considérée dans la direction d'emboîtement, de la partie extérieure (2), et de telle sorte que le tenon de raccordement (5) avec l'élément de retenue (3) peut être déplacé dans la direction d'emboîtement au-delà de la position de verrouillage jusque dans une position de déverrouillage dans laquelle l'élément de retenue (3) peut-être extrait de l'évidement (8) du tenon de raccordement, **caractérisé en ce qu'**un second évidement (18) est prévu dans l'ouverture de la partie extérieure (2), considéré dans la direction d'emboîtement devant l'évidement (23) et à distance de celui-ci, dans lequel l'élément de retenue (3) s'engage par retour de déformation élastique avant d'atteindre la position de verrouillage, et de cette manière retient le tenon de raccordement (5) dans la partie extérieure (2), et **en ce que** dans cette position, le tenon de raccordement (5) n'est pas rendu entièrement étanche dans l'ouverture de la partie extérieure (2) et le deuxième évidement (18) est limité dans la direction d'emboîtement par une surface conique (20) dont le diamètre diminue dans la direction d'emboîtement et est conçu de telle sorte qu'en enfichant plus profondément le tenon de raccordement (5) dans la partie extérieure (2), le tenon de raccordement (5) peut être déplacé avec l'élément de retenue (3) en position de verrouillage dans laquelle le tenon de raccordement (5) est rendu étanche dans l'ouverture de la partie extérieure (2) par un joint annulaire (6), et **en ce que** l'évidement (23) pratiqué dans l'ouverture de la partie extérieure (2), dans lequel s'engage l'élément de retenue (3) lorsqu'il est en position de verrouillage, est muni d'une surface de centrage (36) s'élargissant en formant un cône dans la direction d'emboîtement.

2. Raccord par emboîtement selon la revendication 1, **caractérisé en ce qu'**un élément de butée (40) est fixé de façon réversible sur la section de la partie intérieure (1) qui en position de verrouillage dépasse de la partie extérieure (2), lequel élément de butée limite un mouvement du tenon de raccordement (5) dans la direction d'emboîtement après que le point de verrouillage a été atteint et avant que la position de déverrouillage ne soit atteinte en s'appuyant contre la partie extérieure (2), et **en ce qu'**après l'enlèvement de l'élément de butée (40) de la partie extérieure (2) le tenon de raccordement (5) peut être déplacé en position de déverrouillage.

3. Raccord par emboîtement selon la revendication 1, **caractérisé en ce qu'**un élément de butée (25, 28, 31) est fixé de façon réversible sur l'extrémité antérieure, considéré dans la direction d'emboîtement, de la pièce extérieure (2), lequel élément de butée limite le mouvement du tenon de raccordement (5) dans la direction d'emboîtement, et **en ce qu'**après l'enlèvement de l'élément de butée (25, 28 31) de la partie extérieure (2) le tenon de raccordement (5) avec l'élément de retenue (3) peut être déplacé dans la direction d'emboîtement au-delà de la position de verrouillage dans une position de déverrouillage dans laquelle l'élément de retenue (3) peut être enlevé de l'évidement (23) du tenon de raccordement.

4. Raccord par emboîtement selon la revendication 3, **caractérisé en ce que** l'élément de butée (25) saisit en la recouvrant la face terminale antérieure dans la direction d'emboîtement du tenon de raccordement (5).

5. Raccord par emboîtement selon la revendication 3, **caractérisé en ce que** l'élément de butée (28) en position de verrouillage saisit en la recouvrant l'enveloppe de l'extrémité antérieure du tenon de raccordement (5) et forme une butée pour l'élément de retenue (3).

6. Raccord par emboîtement selon la revendication 2 ou 3, **caractérisé en ce que** l'élément de butée (25, 28, 40) est constitué d'un anneau déformable élastiquement et interrompu par une fente radiale qui recouvre la partie intérieure (1) ou la partie extérieure (2) sur un angle inscrit supérieur à 180°.

7. Raccord par emboîtement selon la revendication 6, **caractérisé en ce que** l'élément de butée (25, 28, 40) s'engage dans une gorge extérieure (22) de la partie extérieure (2) ou de la partie intérieure (1).

8. Raccord par emboîtement selon la revendication 2, **caractérisé en ce que** l'élément de butée (40) recouvre une collerette annulaire (37) formée sur l'enveloppe de la partie intérieure et est muni dans une surface de trou d'une gorge (38) destinée à recevoir la collerette annulaire (37).

9. Raccord par emboîtement selon la revendication 3, **caractérisé en ce que** l'élément de butée (31) est formé par un anneau interrompu par une fente et pouvant être repoussé radialement, qui s'engage dans une gorge intérieure (32) pratiquée dans l'évidement (23) dans la partie extérieure.

10. Raccord par emboîtement selon la revendication 1, **caractérisé en ce que** la partie extérieure (2) est munie sur son extrémité postérieure, considéré par rapport à la direction d'introduction, d'un évidement dans lequel est disposé un joint élastique (7) qui voisine un épaulement de la partie intérieure (1) et, en position de verrouillage du tenon de raccordement (5), exerce sur la partie intérieure (1) une force axiale opposée à la direction d'emboîtement.

11. Raccord par emboîtement selon la revendication 10, **caractérisé en ce que** le joint élastique (7) en position de déverrouillage s'appuie de telle sorte sur le tenon de raccordement (5) et la partie extérieure (2) que le tenon de raccordement (5) est maintenu par le joint (7) en position de déverrouillage par frottement ou par forme.

12. Raccord par emboîtement selon les revendications 10 ou 11, **caractérisé en ce que** le joint élastique (7) forme un élément de butée qui limite un mouvement du tenon de raccordement (5) dans la direction d'emboîtement après que le point de verrouillage a été atteint et avant que la position de déverrouillage ne soit atteinte.

13. Raccord par emboîtement selon l'une des revendications précédentes, **caractérisé en ce que** l'élément de retenue (3) est un anneau circulaire fendu radialement, déformable radialement qui a une section transversale rectangulaire.

14. Raccord par emboîtement selon l'une des revendications précédentes, **caractérisé en ce que** l'évidement (8) pratiqué dans le tenon de raccordement (5) destiné à recevoir l'élément de retenue (3) est constitué d'une gorge extérieure avec des surfaces latérales radiales (10, 11) pour servir d'appui à l'élément de retenue.

15. Raccord par emboîtement selon la revendication 14, **caractérisé en ce que** la surface latérale (10) de l'évidement (8) pratiqué dans le tenon de raccordement (5) contre lequel l'élément de retenue (3) prend appui dans la direction d'emboîtement se poursuit radialement vers l'intérieur par une surface conique (12) se rétrécissant en allant vers le milieu de l'évidement (8).
